Europäisches Patentamt

(19) European Patent Office

Office européen des brevets

(11) Publication number: **0 049 423**
**B1**

(12) **EUROPEAN PATENT SPECIFICATION**

(45) Date of publication of patent specification: **01.04.87**

(21) Application number: **81107578.7**

(22) Date of filing: **23.09.81**

(51) Int. Cl.⁴: **G 06 F 13/00, G 06 F 9/46**

(54) Multiprocessor system.

(30) Priority: **06.10.80 US 194506**
**06.10.80 US 194483**

(43) Date of publication of application:
**14.04.82 Bulletin 82/15**

(45) Publication of the grant of the patent:
**01.04.87 Bulletin 87/14**

(84) Designated Contracting States:
**DE FR GB IT**

(56) References cited:
**EP-A-0 013 301**

(73) Proprietor: **International Business Machines
Corporation
Old Orchard Road
Armonk, N.Y. 10504 (US)**

(72) Inventor: **Obermarck, Ronald Lester
24501 Summerhill Avenue
Los Altos California 94022 (US)**
Inventor: **Strickland, Jimmy Paul
18929 Alcott Way
Saratoga California 95070 (US)**
Inventor: **Watts, Vern Lee
101 Campanula Place
Los Gatos California 95124 (US)**
Inventor: **Carr, Clarence Allen
4975 Massachusetts Drive
San Jose California 95136 (US)**
Inventor: **Huddleston, Robert Louis
1685 Vireo Avenue
Sunnyvale California 94087 (US)**

(74) Representative: **Ekström, Gösta E. et al
IBM Svenska AB Intellectual Property
Department Box 962
S-181 09 Lidingö (SE)**

Courier Press, Leamington Spa, England.

**Description**

This invention relates to multiprocessor systems. More specifically, the present invention relates to dynamically controlling access to and maintaining the integrity of resources shared by different central electronic complexes in a system.

In large data base systems where many work units or subtasks have a need to share access to the same records, there is a need to manage concurrent access to maintain integrity of the data.

One prior art approach to data sharing is illustrated by the concurrent accessing of a VSAM (Virtual Sequential Access Method) data set by two or more subtasks within a single partition, by two or more job steps (partitions), and by any number of users (cross-system sharing). As is explained in VSAM Primer and Reference, IBM Publication G320—5774—01 (1979), at pages 95—97, various options are available for opening a data set for either read or write.

-   In VSAM cross-partition/region sharing the option is defined by the SHARE OPTIONS parameter of the DEFINE command when the VSAM data set is defined. By a first option, a data set may be opened by only one user for output processing (to update or add records), or by multiple users for read operations only. By this option, full read and write integrity is provided. In a second option, a data set can be opened by one user for output processing and by multiple users for read-only processing. In this option, write integrity is provided, but read integrity is not, as users can read a record that is in the process of being updated. In a third option, a data set can be opened by any number of users for both read and write operations, and no integrity (read or write) is provided by VSAM.

In VSAM cross-systems sharing, by a first option, a data set can be opened by any number of users for both read and write operation, and no integrity is provided by VSAM. In a second option, a data set can be opened by any number of users for both read and write operations—however, VSAM provides a new buffer for each direct processing request, and RESERVE and RELEASE macros must be issued by users to maintain data set integrity.

In each of the above options, except the first, the *user* of VSAM must maintain data set integrity, issuing the required ENQ/DEQ or RESERVE/RELEASE macros.

In the prior art IBM IMS/VS product, the issuance of such macros is a function of the Program Isolation facility. (See IMS/VS Version 1 Primer, Program Number 5740-XX2, Release 1.5, IBM Publication SH 20-9145-0, pages 3.12—3.14.) However, this facility does not provide for multiple concurrent access to common data by users executing on different central electronic complexes (CEC's), resulting in a significant impediment to the efficient use of data bases by large organizations.

One prior art approach to enabling multiple concurrent access to common data is shown in European Published Application No. 13301, which describes a concurrency notification facility. External Enqueue Facility (EEF) 5 maintains for each member CPU and congruence class an interest bit. When set, the interest bit indicates that the CPU holds or is waiting for a lock on a data resource of the corresponding congruence class. Each CPU includes an Internal Enqueue Facility (IEF), which maintains for each congruence class a lock bit. Request for access to data resource is granted by the CPU if the corresponding lock bit in the IEF is set; but if not set, the request must be communicated first to the EEF and thence to other CPU's showing in the EEF an interest in the congruence class of the request. The system is, in effect, a concurrency notifier, there being no structure described for controlling concurrent access. Furthermore, the EEF structure is implemented either in a separate hardware device or in one of the CPU's. A failure in the EEF effectively prevents communication between the CPU's and processing of any data resource access request by any of the CPU's: there being no provision in each CPU for maintaining locks held by failed CPU's or the EEF for subsequent recovery.

It is, therefore, an object of the invention to provide an improved method and structure for controlling concurrent access to data resources by different central electronic processor complexes.

According to the invention, there is provided a multiprocessor system adapted for inhibiting access to shared data resources that may be inconsistent due to a failure, comprising a plurality of central electronic processor complexes interconnected by communication means and coupled for shared access to data resource means containing data records arranged in congruence classes, characterized by a plurality of information management means in each complex for accessing said data resource means in response to a request from the complex for access to a defined congruence class in the data resource means or for communicating the request to each other available complex in which interest is indicated and thereafter granting or storing the request in response to lock record data from each complex, in which an interest is indicated, a lock manager system in each complex holding lock records of the current interest of all complexes in each congruence class for selectively granting, waiting and denying locks for data resource means to said management means, operating means in each complex for controlling the operation of the multiprocessor system, for communicating updated lock record data between the complexes to maintain each lock manager system in an updated condition and for retaining locks for data resources selectively across failure of a whole complex of a management means and of the communication means whereby

   (1)  in response to failure of one of the complexes, said information management means in the other complexes are operable to inhibit access to congruence classes in that data resource means in which their respective lock manager system indicates an interest by the failed complex,

   (2)  in response to failure of the communication means, the information management means in each

2

complex is operable to limit access to the congruence classes in the data resource means to classes in which the respective lock manager system indicates an exclusive interest by the complex.

The invention will now be described by way of example, with reference to the accompanying drawings, in which:

Fig. 1 is a block diagrammatic representation of typical computing system embodying the invention.

Fig. 2 is a block diagrammatic view of resource lock manager of Fig. 1.

The present arrangement provides a multiprocessor structure for sharing data resources while maintaining integrity and recovery from failures, with optimum utilization of such computing resources as storage, communication, and computing facilities.

The system employs a resource look manager module whose functions include the following . procedures:

```
        LOCK
        UNLOCK
        INQUIRY
        INQRESP
        GHTUPD
        GRANT
        PTB
        IDENT
        QUIT
        VERIFY
        PURGE
        FAIL
        RECONNECT
```

The above procedures use the following data objects:

```
        MCB         Master Control Block
        RHT         Resource Hash Table
        GHT         Global Hash Table
        RGHT        Retained Locks Global Hash Table
        RHB         Resource Header Block
        RLB         Resource Lock Block
        WHB         Work Unit Block
        SIDB        Subsystem Identify Block
        ISL         Identified Subsystem List
        RLPL        Resource Lock Request Parameter List
```

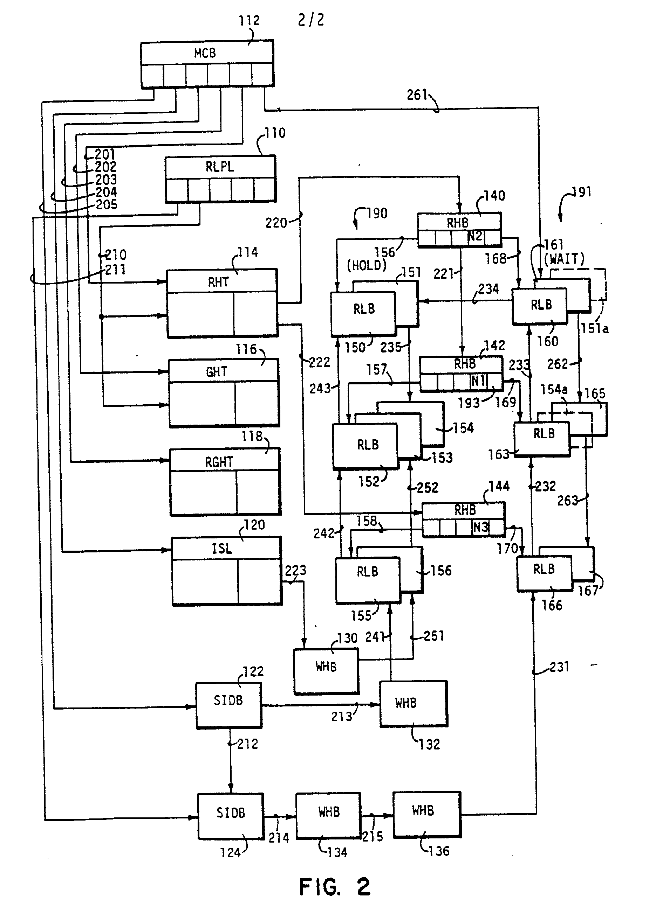

These data objects will be described in connection with Fig. 2, which sets forth a typical configuration of an IRLM 61, 62 and is useful in explaining the relationships between these data structures for various data sharing and failure modes. The RHB, RLB, WHB, and SIDB chains are dynamically structured within each central electronic complex (CEC), as will be more fully described.

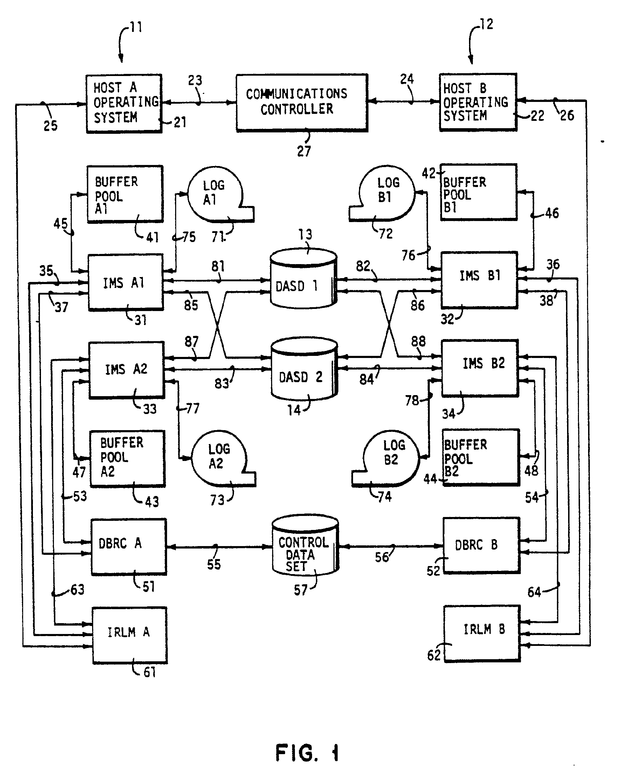

Fig. 1 is a representation of a typical system with plural central electronic complexes (CEC's) 11, 12 sharing access to data stored in Direct Access Storage Devices (DASD) 13 and 14. Within each complex 11, 12 is a real or virtual address space, including a number of data storage and program areas. Those pertinent to the operation of the system are illustrated in Fig. 1 and include a host operating system 21, 22; one or more information management systems (IMS) 31—34; a buffer pool 41—44 for each IMS; a data base recovery control (DBRC) system 51, 52; and an IMS resource lock manager (IRLM) 61, 62.

Each IMS 31—34 is adapted for communication with one of transaction log tapes 71—74. Complexes 11, 12 are interconnected by communications controller 27 (or, alternatively, by a channel-to-channel adapter) and are loosely coupled through shared DASD's 13, 14 and control data set 57.

Each central electronic complex 11, 12 comprises a general purpose central processing unit—together with main storage and virtual storage devices, and the necessary channels and peripheral equipment, such as the IBM System/360 or IBM System/370, the architecture of which is described in U.S. Patent Specification No. 3,400,371 and in IBM System/370 Principles of Operation, IBM Publication GA22-7000-6.

Each complex 11, 12 operates under control of an operating system 21, 22, such as the IBM System/360 and 370 Operating Systems, IBM Publications GC 22-6534, GC 28-0661, and GC 20-1800. IMS's 31—34 execute under control of their respective operating systems 21, 22—and utilize these operating system facilities for interfacing communications controller 27, which may be, for example, an IBM 3705 Communications Controller. This invention provides enhancements to the IBM IMS/VS, program product number 5740-XX2 as described in IBM Publication SH20-9145-0, to provide a new and useful method for sharing of data on DASD devices 13, 14 between IMS's 31—34 executing on the same or different CEC's 11, 12.

Data base recovery control (DBRC) modules 51, 52 on each CEC share a control data set 57, which may

3

**0 049 423**

reside on a direct access storage device, such as an IBM 3350. An example of a DBRC is the IBM IMS/VS Data Base Recovery Control Feature, program number 5740-XX2, described in IBM Publication SH35-0027-1, as modified to operate a computing system as will be subsequently described.

Referring further to Fig. 1, the operation of a typical computing system, including two CEC's 11, 12, will be described. Assuming that no failure conditions exist, one or more application programs (not shown) execute in a multiprogramming environment on each CEC, each one under control of one of IMS's 31—34.

When an application work unit executing under IMS 31, for example, requires access to a data resource residing, for example, on DASD 13, IMS 31 will generate a lock request for communication to IRLM 61, as is represented by control path 35. A lock request includes the information in Table 1.

TABLE 1
Lock request format

| Key | Hash | State | SIDB Addr | Option |
|-----|------|-------|-----------|--------|

The Key field gives the name of the data base record, or resource, to which access is required. The Hash field gives the hash class, or congruence class of the resource—which is determined by any one of a number of hashing techniques available in the prior art, such as described in the above mentioned European Published Application No. 13301. The State field specifies one of eight lock states and is used to determine resultant state and compatibility when a data resource is being locked by more than one work unit. In order to permit a data resource to be locked more than once by a given work unit, when a work unit locks a resource for a second time, specifying a different state than for the first lock request, the state in which the lock is finally held should be one that carries the privileges of the second state without losing those conferred by the first. This permits a nonhierarchical privilege order, where each higher state does not necessarily include all the privileges of the preceding one.

The state value from the lock request State field, and that of the prior lock request by the same work unit for the same resource, are used to enter the following resultant state matrix to obtain a third state. The lock request is then processed in IRLM 61 as a request for the third state.

TABLE 2

| Resultant state matrix (Third state) | | | | | | | | | |
|---|---|---|---|---|---|---|---|---|---|
| Held \ Requested | | 1 | 2 | 3 | 4 | 5 | 6 | 7 | 8 |
| 1 | | 1 | 2 | 3 | 4 | 5 | 6 | 7 | 8 |
| 2 | | 2 | 2 | 3 | 4 | 5 | 6 | 7 | 8 |
| 3 | | 3 | 3 | 3 | 6 | 5 | 6 | 7 | 8 |
| 4 | | 4 | 4 | 6 | 4 | 5 | 6 | 7 | 8 |
| 5 | | 5 | 5 | 3 | 5 | 5 | 6 | 7 | 8 |
| 6 | | 6 | 6 | 6 | 6 | 6 | 6 | 7 | 8 |
| 7 | | 7 | 7 | 7 | 7 | 7 | 7 | 7 | 8 |
| 8 | | 8 | 8 | 8 | 8 | 8 | 8 | 8 | 8 |

When more than one work unit is accessing the same resource, the following matrix is used to determine if the lock request states are compatible (x indicates incompatibility).

4

TABLE 3

| Compatibility matrix | | | | | | | | | |
|---|---|---|---|---|---|---|---|---|---|
| Requested<br>Held | | 1 | 2 | 3 | 4 | 5 | 6 | 7 | 8 |
| 1 | | | | | | | | | X |
| 2 | | | | | | | | X | X |
| 3 | | | | | X | X | X | X | X |
| 4 | | | | X | | | X | X | X |
| 5 | | | | X | | X | X | X | X |
| 6 | | | | X | X | X | X | X | X |
| 7 | | | X | X | X | X | X | X | X |
| 8 | | X | X | X | X | X | X | X | X |

Returning to Table 1, Lock Request, the SIDB Addr field specifies the location in memory of the system identified block and is used to access the work header block (WHB) chain in IRLM 61, as will be described more fully hereafter. The Option field specifies whether the lock request is conditional or unconditional. If the "conditional" option is specified and the IRLM determines that the resource was previously locked in an incompatible state (as determined by Table 3), the work unit will be notified that the lock cannot be granted. However, if the "unconditional" option is specified, the lock requested will be waited, and the work unit only notified when the prior lock is released and the waited request granted.

In processing the lock request, IRLM 61 may communicate with IRLM 62 along the control/data path 25, 21, 22, 23, 27, 24, 26. The conditions under which such communication is necessary or avoided will be more fully described hereafter, as will be the structure and steps for granting the locks.

Once the lock is granted by IRLM 61 to IMS 31, it accesses the desired data in DASD 13 over line 81, and reads the data into its buffer pool 41. At an appropriate commit point in the processing the data by the application work unit, the data is written back out to DASD 13 and IRLM 61 notified to release the locks.

In a similar manner, IMS's 31—34 cooperate with IRLM's 61, 62 to access data on DASD's 13, 14 and operate on the data stored in buffer pools 41—44.

Each IMS 31—34 maintains a log of all transactions on log tapes 71—74, respectively, for recovery in the event of a failure. Data base recovery control facilities 51, 52 share access to control data set 57, and cooperate with IMS's 31—34 to control the recovery of a data base in the event of a system or other failure, as will be more fully described.

Referring now to Fig. 2, a description of IRLM 61 will be given, defining the primary data objects used in operating the computing system.

Resource Lock Request Parameter List (RLPL) 110 is used by IMS 31, 33 to submit a request to IRLM 61. It includes, in accordance with the preferred embodiment, a 32-bit resource hash value 210, a 32-byte resource name, a 4-byte SIDB address 211, an 8-byte work unit ID, a 1-byte requested lock state, and an option indicator (conditional or unconditional).

Master Control Block (MCB) 112 provides address pointers 201—205, 261 to the following data objects: RHT 114, GHT 116, RGHT 118, ISL 120, SIDB 122 (the first in the SIDB 122, 124 chain 212), and RLB 161 (the first in the chain 262—263 of wait RLB's 161, 165, 167 corresponding to requests from the other IRLM 62).

Resource Hash Table (RHT) 114 contains herein 512 entries. Each entry is 8 bytes long and includes a 32-bit mask (4 bytes) and a 4-byte pointer (such as 220, 222) to the first RHB (140 and 144, respectively) in the corresponding RHT hash class (also referred to as a hash group or a congruence class). Each bit in the RHT bit mask corresponds to one of the 16 384 entries in the GHT, infra, and, when set, serves as the private use indicator discussed more fully hereafter.

Global Hash Table (GHT) 116 contains herein 16 384 entries, each entry being one byte long, with each bit thereof assigned to correspond to one IRLM identifier (IRLMID). In the present description, only two bits are utilized, however, corresponding to IRLMID=1 for IRLM 61, and IRLMID=2 for IRLM 62. A bit on in a GHT 116 entry means that the IRLM 61, 62 with the corresponding IRLMID is holding and/or waiting for a lock on at least one resource that hashes into that GHT 116 entry.

Retained Locks Global Hash Table (RGHT) 118 contains herein 16 384 entries. As with GHT 116, each entry in RGHT 118 is one byte long, with two bits (0 and 1) utilized in this embodiment and bit 0 corresponding to IRLMID=1 for IRLM 61, and bit 1 corresponding to IRLMID=2 for IRLM 62. A bit on in a RGHT 118 entry means that the IRLM 61, 62 with the corresponding IRLMID was holding and/or waiting for a lock on at least one resource that hashed into the GHT entry corresponding to this RGHT entry at the time that IRLM failed (abnormally terminated). No new lock requests may be granted against locks that hash into a RGHT entry that has any bit on.

Identified Subsystem List (ISL) 120 provides a list of entries defined by the IDENT procedure. Each IRLM 61, 62 contains a copy of ISL 120, which shows all IMS's 31—34 associated with both IRLM's. An entry contains:

(1)  an 8-byte IMS 31—34 name
(2)  the IRLMID of the IRLM 61, 62 to which the IMS 31—34 is or was last connected.
(3)  a one byte "retained by QUIT RETAIN" mask, with each bit assigned to an IRLM in the same manner as in a GHT entry, and a bit on in this mask meaning the corresponding IRLM 61, 62 has locks retained for this IMS 31—34 due to an explicit QUIT RETAIN request.
(4)  a one byte "retained due to IRLM or communications failure" mask (ISLFMSK), with each bit assigned to an IRLM as in a GHT entry, and a bit on in this mask meaning the corresponding IRLM was holding locks for this IMS and then an IRLM, system or communications failure occurred.
(5)  a four-byte pointer 223 to a dummy WHB 130 from which retained lock RLB's 156, 153 are chained 251, 252. This exists only for the QUIT RETAIN case and then only in the ISL 120 of the IRLM 61, 62 to which the IMS 31—34 was connected when the QUIT request was issued, as will be more fully described hereafter.

An IMS Subsystem Identify Block (SIDB) 122, 124 is built by IRLM 61 or 62 when an IMS subsystem 31—34 is identified to the IRLM. The WHB's for this IMS's work units are chained from this block. Herein, by way of example, SIDB 122 is chained via 213 to WHB 132 and SIDB 124 is chained via 214, 215 to WHB's 134, 136.

Each Work Unit Block (WHB) 132, 134, 136 represents an IMS work unit that holds and/or waits for locks, and contains a chain of all hold and wait RLB's associated with the WHB. By way of example, wait RLB's 166, 163, 160 and hold RLB's 151, 154 are chained 231, 232, 233, 234, 235 to WHB 136; and hold RLB's 155, 152, 150 are chained via 241, 242, 243 to WHB 132, respectively.

Resource Header Blocks 140, 142, 144 are created for each unique resource name for which a lock is requested and/or held, with all RHB's that hash into one of the plurality of hash groups corresponding to one RHT entry forming an RHB chain. Each RHB contains:

(1)  the resource hash value (32 bits)
(2)  the resource name (32 bits)
(3)  an IRLM interest mask, which is used in the same manner as a GHT entry. A bit on in this mask means the corresponding IRLM is currently holding a lock on this resource.
(4)  an RHB chain word, used to maintain a chain of RHB's that hash into the same RHT entry. By way of example, RHB 140 is chained via 221 to RHB 142 and anchored via 220 to an entry in RHT 114. RHB 144 is anchored via 222 to a different entry in RHT 114.
(5)  a wait RLB chain word, and a hold RLB chain word, chaining the RHB to chains of lock holder RLB's and lock waiter RLB's. By way of example, RHB 140 is chained via 156 to lock holder RLB's 150—151 and chained via 168 to lock waiter RLB's 160—161; RHB 142 is chained via 157 to lock holder RLB's 152—154 and chained 169 to lock waiter RLB's 163, 165; and RHB 144 is chained via 158 to lock holder RLB's 155, 156 and chained via 170 to lock waiter RLB's 166, 167.

Each Resource Lock Block (RLB) represents a lock holder or a request waiting to acquire a lock. Each RLB includes, inter alia, the lock state.

The data structure configuration of Fig. 2 represents a typical configuration for one IRLM, say 61, and a similar structure will exist for the other IRLM 62. Some data objects are maintained in sync (that is, substantially identical), allowing for communication delays during normal processing—and these include the GHT, RGHT, and ISL.

The Resource Lock Manager IRLM 61, 62 provides lock services used by the IMS 31—34 Data Sharing Function. The lock services include the retention of locks across IMS subsystem, VTAM, intersystem communications link, and MVS failures. The retained locks inhibit access to data base 13, 14 information that may be inconsistent due to the failure.

The integrity of data base 13, 14 information within the IMS/VS Shared Data environment is the combined responsibility of the DL/I Data Management Function (a component of IMS 31—34), Data Base Recovery Control (DBRC) 51, 52 and the IRLM 61, 62.

DL/I (a component of IMS) performs the access to the data bases 13, 14 and maintains log data sets 71—74 that are used to recover/repair the data bases when various failures occur.

DBRC 51, 52 maintains data base data set usage information. This information shows which IMS/VS subsystems are currently using each data set. DL/I 31—34 invokes DBRC 51, 52 services when allocating and deallocating the data sets on DASD 13, 14. During data set allocation, DBRC 51, 52 returns to DL/I

31—34 a list containing the names of the IMS/VS 31—34 subsystems that are currently using the data set. DL/I 31—34 invokes an IRLM 61—62 service (VERIFY) passing the IMS 31—34 name list. The IRLM returns to DL/I an indication of whether each IMS 31—34 in the list is or is not currently using the IRLM 61—62 Services. Using the IRLM 61, 62 Services includes the case when the IMS was using the IRLM but failed, and the IRLM is retaining its locks. If any of the IMS subsystems 31—34 are not known by IRLM 61—62, then DL/I 31—34 will not allocate the data set. This is necessary because unless IRLM 61—62 is holding locks for each of the IMS subsystems 31—34, continued use of the data set will expose the integrity of the data.

As previously noted, each IRLM 61, 62 maintains in an IMS/VS Identified Subsystem List (ISL), a list of all IMS subsystems 31—34 currently connected to either of the two IRLM's in the two-system environment. ISL 120 is used to process a VERIFY request to determine if the IMS subsystem names in the input list are in ISL 120. Each IRLM 61, 62 holds the locks for the set of IMS 31—34 subsystems connected to it. Both IRLM's 61, 62 maintain a copy of the Global Hash Table (GHT) 116 and the Retained Locks Global Hash Table (RGHT) 118.

The ISL 120, GHT 116 and RGHT 118 provide the information that protects the locks across intersystem communications, subsystem, and/or system failures.

With respect to the retention of locks across outage of an IMS subsystem 31—34, the IRLM 61—62 retains all locks held by a failed IMS subsystem. This permits continued use of data bases that were shared with the failed subsystem. The locks inhibit access to the specific data items that are inconsistent due to the failure, but permit access to all other parts of the data bases. When either restart or recovery processing is performed for the failed IMS, DL/I requests IRLM 61, 62 to release the retained locks, thus permitting full access to the data bases.

Failure of one of the two systems 21, 22 causes the IRLM 62, 61 in the other system to retain (in RGHT 118) the GHT 116 information for the IRLM in the failed system. The GHT 116 shows all hash classes in which the failed IRLM 62, 61 held resource locks. The remaining IRLM 61, 62 will not grant new lock requests for resources in these hash classes until the failed IRLM's interest bits have been removed from the corresponding GHT 116 entries. These bits will be cleared when restart or recovery has been performed for all of the IMS subsystems that were associated with the failed IRLM. ISL 120 shows this list of subsystems. The restart/recovery may be performed on the system that continues to operate after the failure or on the original system after it has been restarted.

GHT 116 permits continued processing during an outage of intersystem communications capability. A GHT 116 entry value of 10 means that IRLM 61 holds locks on resources that map into the entry and IRLM 62 does not hold locks on any such resources. A value of 01 means IRLM 62 holds locks and IRLM 61 does not hold locks on resources that map into the entry. During the communications outage, IRLM 61 grants locks for any resources that map into GHT entries of value 10, and IRLM 62 grants locks for resources that map into entries of value 01. Neither IRLM grants any new locks for resources that map into GHT entries that contain other values.

When communications are re-established, both IRLM's exchange information to form a composite GHT and ISL, and then both IRLM's resume normal lock function, using the new GHT.

Referring now to Fig. 1, the operation of the computing system, including two central electronic complexes 11, 12, will be described.

Operation of the computing system to retain locks across system (IMS 31—34), communication (controller 27 and link 21—24) and IRLM 61, 62 failures is based primarily upon the structure including DBRC 51, 52, with its control data set 57 and the ISL 120/GHT 116/RGHT 118 structures of IRLM's 61, 62.

Data Base Recovery Control (DBRC) modules 51, 52 coordinates IMS systems IMS 31—34 to merge logs 71—74 after a failure to reconstitute data bases stored in DASD 13, 14. DBRC 51, 52 also operate to inform IMS's 31—34 which IMS's are accessing data. To do so, DBRC 51, 52 maintain status of use of the data bases by each IMS, keeping a record of which IMS systems have access to each data base and its state (update, read only).

An example of a DBRC 51, 52 module is the IMS/VS Data Base Recovery Control Feature described in IBM Publication SH35-0027-1, Program Number 5740-XX2, Second Edition (Mar. 1979), as subsequently modified to operate according to the method described hereafter—which modifications, however, do not form a part of the present invention. Rather, this lock retention invention relates to those method steps executed under control of IRLM 61, 62 and their interconnecting components. However, to fully appreciate the system, it is necessary to consider the environment in which IRLM 61, 62 operates, including those functions performed by DBRC 51, 52 and IMS 31—34.

As an application program or work unit accesses a data base record on DASD 13, 14 for update, it is placed in one of buffer pools 41—44. After the record has been changed or added, it is written back out to DASD 13, 14, and copies in other buffer pools 41—44 corrected to make the change, and a record of the change recorded on one of log devices 71—74, together with a sequence number. If, thereafter, a data base fails, it may be repaired from information in logs 71—74. The problem is merging changes to the data base (13, 14) from different logs 71—74 in the correct sequence. DBRC 51, 52 and IRLM 61, 62 are used according to the following protocol to control that repair.

Assume that an application under IMS 31 requires access to a data resource on DASD 13. Data sharing/locking coordination is as follows:

(1) IMS 31 goes to DBRC 51 to ascertain if the data base containing the required record is available in a compatible state.

(2) If compatible, DBRC 51 advises IMS 31, and

(3) DBRC 51 advises IMS 31 which other subsystems (i.e., IMS 34) are using the data base.

(4) IMS 31 goes to IRLM 61 and asks if IMS 34 is known to IRLM 61. (If not, IMS 31 cannot rely on IRLM 61 to ensure that the data base is protected. This could happen if CEC 12 had failed and IRLM 61 had not received communication from IRLM 62 regarding the activity of IMS 34). IRLM 61 return codes to IMS 31 are:

    0   IMS 34 is active on IRLM 61 or IRLM 62.

    4   IMS 34 has terminated, but its locks are retained in IRLM 61 and/or IRLM 62.

    8   IMS 34 is unknown to IRLM 61.

(5) If IMS 31 receives a return code of 8, it is not permitted to access the data base.

(6) If IMS 31 receives a return code of 4, IMS 31 can access the data base, but not updated data (i.e., data resources or data records) within the data base previously locked by IMS 34. If a collision occurs with a lock held by IMS 34, IMS 31 receives a "lock request denied due to lock retained for a failed IMS" status on such request.

(7) If IMS 31 receives a return code of 0, IMS 31 is permitted to access the data base. If a collision occurs with a lock held by IMS 34, IMS 31 will wait for the lock to be released by IMS 34. (Any changes in the locks by one IMS are broadcast by IRLM 61, 62 to the other. This is the normal situation).

The procedure to be followed during recovery from a failure will next be described. Assume that CEC 11 fails, causing operating system 21, IMS's 31, 33, DBRC 51, and IRLM 61 all to fail. Thereafter, the computer operator restarts operating system 21, IMS 31, DBRC 51, and IRLM 61. IRLM 61 re-establishes communications with IRLM 62. The GHT 116, RGHT 118, and ISL 120 for IRLM 61 will be re-established from IRLM 62. If IMS 31 desires to access data base 13, it will go to DBRC 51 for authorization. DBRC 51, from information logged on control data set 57, informs IMS 31 that IMS 33 has access to data base 13. IMS 31 then goes to IRLM 61, which returns with return code 4—indicating that IMS 33 has failed but its locks are retained. Consequently, IMS 31 restores data base 13 from data on its log 71 and continues to use data base 13. Subsequently, when IMS 33 restarts and desires to access data base 13, it goes first to DBRC 51. DBRC returns with an indication that IMS 31 is using data base 13, and that IMS 33 has backout responsibility. Consequently, IMS 33 will, from log 73 data, restore data base 13—advising DBRC 51 when it is completed. IMS 33 and 31 can now access data base 13.

In this environment, an application is considered to have backout responsibility if it has written back to DASD an updated record but has not yet released the locks, and a failure occurs which prevents completion of the work unit. A work unit may, typically, access many records—all of which must be updated to be consistent before the locks are released. Thus, herein a commit point is defined as that point in processing an application when all changed records have been written out to DASD and the locks released.

For example, assume a work unit on IMS 31 includes accesses to data base 13 records DBS 1, DBS 2, DBS 3, and then commit, in that order. Assume that IMS33 fails after updated DBS 2 has been written to DASD 13. If IMS 31 already holds the lock on DBS 3, it can access DBS 3 and proceed to commit. If it doesn't, then IMS 31 must back out its updates to DBS 1 and DBS 2. On the other hand, if IMS 33 fails after DBS 3 has been accessed, then IMS 31 can proceed to commit.

The IRLM is architected for 8-way sharing. However, the following implementation deals only with 2-way sharing.

With reference now to the figures, the basic structure and operation of the system will be described for various typical situations.

Multiple concurrent access to data resources shared by a plurality of work units executing on two central electronic complexes (CEC) is controlled with a minimum of communication and with optimum utilization of space required in each CEC for storage of lock data by providing in each CEC a resource lock manager (IRLM) that includes a global hash table (GHT) that contains an interest bit for each CEC's IRLM in each congruency class and chains of held and wait resource lock blocks (RLB's) associated with resource header blocks (RHB's) and work unit blocks (WHB's). The RHB's are chained and anchored to a Resource Header Table (RHT), which includes for each corresponding entry in the GHT an exclusive use bit. The WHB's are anchored to a subsystem identification block (SIDB). Wait RLB's not anchored to a WHB and which, therefore, relate to requests from the other IRLM, are chained together.

A request for a lock within the above structure will next be described. In this description, data structures shown in Fig. 2 pertaining to IRLM 62 will be indicated by a prime "'". Thus, the GHT of IRLM 61 is GHT 116, and that for IRLM 62 is GHT 116'.

Case I. A request is made, by way of example, for a lock on data resource N1 by IMS 31 on behalf of a work unit by submitting RLPL 110 to IRLM 61. Assuming for this case that the GHT 116, 116' entry=00 for the corresponding hash class H1 in both IRLM's 61, 62. RLB 154a is created for the request and placed in the wait chain 169 for the data resource N1 (RHB 142). Procedure PTB will set the GHT 116 entry=10 in IRLM 61 for H1 and communicate the updated GHT 116 entry via controller 27 to IRLM 62, which will execute procedure GHTUPD to set its GHT 116' entry=10 for H1. IRLM 61 will grant the lock to IMS 31 for N1, set the private use bit on in its RHT 114 for the hash class H1 of the requested data resource and move RLB 154a for the request from wait chain 169 to hold chain 157 for RHB 142. In IRLM 62, no entry is made in RHT 114', nor is an RLB created.

Case II. Assuming that the condition created by Case I exists, and a request is made of IRLM 62 by IMS 32. In subcase IIA, the request is for the same data resource (N1) as in Case I. In subcase IIB, the request is for a different data resource N2 of the same hash class H1.

Subcase IIA: IRLM 62 will create an RLB 154a' and place it in the wait queue 169' for RHB 142' of resource N1. It will then change the GHT 116' entry for the has class H1 from 10 to 11 and communicate to IRLM 61 a GHT update request (GHTUPD) and an inquiry request (PTB). IRLM 61 will update its GHT to reflect the interest of IRLM 62 (GHT). It will also process the inquiry. INQUIRY determines, in this subcase IIA, that the request is for a data resource N1 for which a lock has been granted by IRLM 61. Consequently, it accesses hold RLB's 152—154 to determine if this request is compatible (compatible states) with the previously granted lock (or locks). Assuming that the states are compatible, the IRLM interest mask 193 in RHB 142 for the resource in IRLM 61 is set to show IRLM 62's interest and IRLM 62 notified that it can grant the lock. IRLM 62 sets the IRLM interest mask 193' in its RHB 142' for the resource to show IRLM 61's interest, the RLB 154a' is moved from the wait RLB claim 169' to the hold RLB chain 157', and the lock granted to IMS 32.

Assume that this condition prevails, and a request is now made of IRLM 61 for further use of the same data resource N1 with a state which is not compatible with the now prior existing lock on N1 held in IRLM 62. Because IRLM 62's interest bit is on in GHT 116 (GHT 116=11 for H1), IRLM 61 sends a lock request to IRLM 62, specifying the name (N1), hash class (H1), state, and option (assume unconditional). An RLB 163 is created and put in wait chain 169 for RHB 142. In IRLM 62, an RLB 165' is created and added to the wait chain 169 for RHB 142 and, because it is for an incompatible state with, say, the lock corresponding to RLB 154' in the hold chain 157' for RHB 142', RLB 165' is added to the wait RLB chain which is anchored to MCB 112' (rather than to a WHB). No response is communicated from IRLM 62 to IRLM 61' (the request was unconditional), and the lock request is suspended until, in normal processing, the holder of RLB 154' makes an UNLOCK request. IRLM 62 will release RLB 154'. Assuming that either there are no other RLB's in hold chain 157' for RHB 142', or that RLB 165' is at the top of wait queue 169' for RHB 142' and of a state compatible with any RLB's still in hold queue 157' for RHB 142', then RLB 165' is released and communication made to IRLM 61 that it can grant the lock requested previously for data resource N1. If RLB 165' were the only wait RLB and there were no hold RLB's for RHB 142', then RHB 142' would also be released. Further, IRLM 62 would reset its interest bit for H1 in GHT 116' (GHT 116'=10 for H1), and instruct IRLM 61 to set GHT 116=10 for H1. Note that no hold RLB has been added to the hold chain for N1 in IRLM 62, but such does exist in IRLM 61 (i.e., RLB 165 is moved from wait chain, as shown, to hold chain, 157, for RHB 142). In this state, IRLM 61 has private use of data resource hash group H1, as GHT 116=GHT 116'=10 for hash group H1. The corresponding interest bit in RHT 114=1, and in RHT 114'=0.

Subcase IIB: In this example, with the above condition prevailing, a request is made of IRLM 62 by IMS 32 on behalf of work unit of WHB 136' for a lock on a different data resource (N2) which hashes (H1) to the same GHT 116' entry as for a previous request. Initially, GHT 116=GHT 116'=10 (IRLM 61 has an interest and IRLM 62 does not) for hash group H1 of data resources N1, N2. IRLM 62 sets GHT 116'=11 for H1, adds wait RLB 151a' to the wait chain 168' for RHB 140' (the RHB for data resource N2), and of WHB 136'—not as shown in Fig. 2 at this stage—, sends a request to IRLM 61 to update its GHT 116, and a request for a lock on data resource N2 of hash group H1.

IRLM 61 updates GHT 116 (GHT 116=11 for hash group H1), resets the corresponding mask bit in RHT 114 (as IRLM 61 no longer has private use of hash group H1), and searches the RHB chain anchored to the RHT 114 entry corresponding to hash group H1 for an RHB having N2 as its key. Assuming, in this example, that there is no RHB for data resource N2 in IRLM 61, then IRLM 61 responds to IRLM 62 that it is okay to grant the lock. IRLM 61 will not remember the resource locked.

IRLM 62 then moves RLB 151' from the wait chain 168' to hold chain 156' for RHB 140' and grants the lock. RLB 151' is now as shown in Fig. 2 in the chain anchored to WHB 136'.

This ends Case II for granting locks.

In summary, concurrent access to data resources shared by a plurality of work units executing on two central electronic complexes (CEC) is controlled with a minimum of communication and with optimum utilization of space required in each CEC for storage of lock data by providing in each CEC a resource lock manager (IRLM) that includes a global hash table (GHT) that contains an interest bit for each CEC's IRLM in each congruency class and chains of held and wait resource lock blocks (RLB's) associated with resource header blocks (RHB's) and work unit blocks (WHB's). The RHB's are chained and anchored to a Resource Header Table (RHT), which includes for each corresponding entry in the GHT an exclusive use bit. The WHB's are anchored to a system identification block (SIDB). Wait RLB's not anchored to a WHB and which, therefore, relate to requests from the other IRLM, are chained together.

A request of a first IRLM for a lock by a work unit to access a data resource is processed by determining from the RHT/GHT if the first IRLM has exclusive, or private, use of the congruence class. If so, the request is processed within the first IRLM. If not, the second IRLM also has interest in the congruence class, communication is made to the other IRLM, which will also process the request.

A lock request will be granted and an RLB hold chain entry for the RHB of the data resource created in the first IRLM if the request is for a data resource that is not previously locked to an incompatible state by either IRLM. On the other hand, if the request is incompatible with a lock on the data resource held in either IRLM, an RLB entry will be added for the request to the wait chain of the RHB having the incompatible held RLB. To optimize communication and lock maintenance processing, the second IRLM does not maintain hold RLB's granted by the first IRLM, but does maintain wait RLB's for the first IRLM—thus enabling the second IRLM to advise the first IRLM when the incompatible held lock is released.

Each IRLM 61, 62 maintains an ISL 120, 120' which will be in synchronization following completion of PTB processing during normal operation.

Assume now that an IMS 33 on CEC 11 terminates. The SIDB, and all WHB's anchored thereto, previously created for IMS 33 are released, as are any wait RLB's anchored to the released WHB's. This leaves the hold RLB's which must be remembered (to prevent other IMS's from obtaining locks to inconsistent data resources held by terminated IMS 33). Consequently, a dummy WHB 130 is created, anchored to the ISL 120 entry for IMS 33, and chained to the hold RLB's 156, 153 previously held by one or more work units executing under IMS 33. In each such RLB 153, 156, a LOCK RETAINED bit is set.

When a subsequent request received for a lock on a data resource for which a prior lock has been granted to a now terminated management system, the lock-held chain is checked for incompatible, retained locks. If such is found, the lock request is rejected; whereas, if an incompatible lock which is not a retained lock is located, the request is waited. Thus, in the example of the preceding paragraph, assume that IMS 34 requests of IRLM 62 a lock on data resource N3 of hash group H2. GHT 116' will show that IRLM 61 has an interest, so the lock request is sent to IRLM 61. IRLM 61 searches the RHB chain corresponding to hash group H2, and finds therein RHB 114. Assuming that the lock request is for a state which is incompatible with the state of RLB 156, and because the LOCK RETAINED bit is set in RLB 156, IRLM 61 responds with a lock rejected message—which will be communicated by IRLM 62 to IMS 34.

## Claims

1. A multiprocessor system adapted for inhibiting access to shared data resources that may be inconsistent due to a failure, comprising a plurality of central electronic processor complexes (11, 12) interconnected by communication means (23, 24, 27) and coupled for shared access to data resource means (13, 14) containing data records arranged in congruence classes, characterized by a plurality of information management means (31, 33; 32, 34) in each complex for accessing said data resource means in response to a request from the complex for access to a defined congruence class in the data resource means or for communicating the request to each other available complex in which interest is indicated and thereafter granting or storing the request in response to lock record data from each complex, in which an interest is indicated, a lock manager system (61, 62) in each complex holding lock records of the current interest of all complexes in each congruence class for selectively granting, waiting and denying locks for data resource means to said management means, operating means (21, 22) in each complex for controlling the operation of the multiprocessor system, for communicating updated lock record data between the complexes to maintain each lock manager system in an updated condition and for retaining locks for data resources selectively across failure of a whole complex (11, 12) of a management means (31, 32, 33, 34), and of the communication means (23, 24, 27), whereby

    (1)  in response to failure of one of the complexes, said information management means in the other complexes are operable to inhibit access to congruence classes in that data resource means in which their respective lock manager system indicates an interest by the failed complex,

    (2)  in response to failure of the communication means, the information management means in each complex is operable to limit access to the congruence classes in the data resource means to classes in which the respective lock manager system indicates an exclusive interest by the complex.

2. A system as claimed in claim 1, characterized in that in response to failure of one of the information management means the remaining information management means are operative to inhibit access to congruence classes in the data resource means in which the failed means held a lock in the lock manager system.

3. A system as claimed in claim 2, characterized in that on failure of a complex (11, 12) or the communication means or in an information management means the lock management systems in the continuing complexes retain locks related to the failure to effect access inhibition until the completion of restart/recovery processing of the failed unit.

## Patentansprüche

1. Mehrprozessor-System, welches für ein Sperren eines Zugriffs auf gemeinsame Daten-Betriebsmittel, die durch einen Ausfall inkonsistent sein können, eingerichtet ist, mit einer Anzahl von zentralen elektronischen Prozessorkomplexen (11, 12), welche durch Kommunikationsmittel (23, 24, 27) untereinander verbunden und so angeschlossen sind, daß sie gemeinsam Zugriff auf Daten-Betriebsmitteleinrichtungen (13, 14) haben, welche in Kongruenzklassen angeordnete Datensätze enthalten, gekennzeichnet, durch eine Anzahl von Informationsmanagementmitteln (31, 33; 32, 34) in

**0 049 423**

jedem Komplex für ein Zugreifen auf die Daten-Betriebsmitteleinrichtungen ansprechend auf eine Anforderung eines Komplexes nach Zugruff auf eine definierte Kongruenzklasse in den Daten-Betriebsmitteleinrichtungen oder ein Mitteilen der Anforderung an jeden anderen verfügbaren Komplex, in welchem ein Interesse angezeigt wird, und ein nachfolgendes Gewähren oder Speichern der Anforderung ansprechend auf Sperrsatzdaten eines jeden Komplexes, in welchem ein Interesse angezeigt wird, ein Sperrmanagersystem (61, 62) in jedem Komplex, welches Sperrsätze des aktuellen Interesses aller Komplexe in jeder Kongruenzklasse zum ausgewählten Gewähren, In-Wartestellung-Bringen und Verweigern von Sperren für die Daten-Betriebsmitteleinrichtungen an die Managementmittel hält, Operationsmittel (21, 22) in jedem Komplex zur Steuerung der Operation des Mehrprozessor-Systems, zur Übertragung von aktualisierten Sperrdatensätzen zwischen den Komplexen, um jedes Sperrmanagersystem in einem aktualisierten Zustant zu halten, und zum Aufbewahren von Sperren für Daten-Betriebsmittel ausgewählt über die Störung eines ganzen Komplexes (11, 12) von Managementmitteln (31, 32, 33, 34) und der Übertragungsmittel (23, 24, 27) hinweg, wodurch

(1) ansprechend auf den Ausfall eines der Komplexe die Informationsmanagementmittel in den anderen Komplexen so betriebbar sind, daß sie einen Zugriff auf Kongruenzklassen in den Daten-Betriebsmitteleinrichtungen sperren, an welchen ihr betreffendes Sperrmanagersystem ein Interesse durch den ausgefallenen Komplex anzeigt,

(2) ansprechend auf einen Ausfall der Kommunikationsmittel die Informationsmanagementmittel in jedem Komplex so betreibbar sind, daß sie den Zugriff auf Kongruenzklassen in den Daten-Betriebsmitteleinrichtungen auf Klassen beschränken, an welchen das betreffende Sperrmanagersystem ein ausschließliches Interesse durch den Komplex anzeigt.

2. System nach Anspruch 1, dadurch gekennzeichnet, daß ansprechend auf einen Ausfall eines der Informationsmanagementmittel die verbleibenden Informationsmanagementmittel so arbeiten, daß sie den Zugriff auf Kongruenzklassen in den Daten-Betriebsmitteleinrichtungen sperren, an welchen die ausgefallenen Mittel eine Sperre im Sperrmanagersystem hielten.

3. System nach Anspruch 2, dadurch gekennzeichnet, daß bei Ausfall eines Komplexes (11, 12) oder der Kommunikationsmittel oder in einem der Informationsmanagementmittel die Sperrmanagementsysteme in den fortsetzenden Komplexen auf den Ausfall bezogene Sperren halten, um eine Zugriffssperre bis zur Beendigung der Wiederanlaufs/Wiederherstellungs-Verarbeitung der ausgefallenen Einheit zu bewirken.

**Revendications**

1. Système multiprocesseur agencé pour inhiber l'accès à des ressources de données partagées qui peuvent être incohérentes en raison d'un dérangement, comportant plusieurs complexes de processeurs électroniques centraux (11, 12) interconnectés par un dispositif de communication (23, 24, 27) et connectés pour un accès partagé à des ressources de données (13, 14) contenant des enregistrements de données disposés dans des classes de congruence, caractérisé par plusieurs dispositifs de gestion d'information (31, 33; 32, 34) dans chaque complexe pour accéder auxdites ressources de données en réponse à une demande provenant du complexe pour accéder à une classe de congruence définie dans les ressources de données ou pour communiquer la demande à chaque autre complexe disponible dans lequel un intérêt est indiqué et pour ensuite accorder ou mémoriser la demande en réponse à des données d'enregistrement de verrouillage provenant de chaque complexe dans lequel un intérêt est indiqué, un système de gestion de verrouillage (61, 62) dans chaque complexe maintenant des enregistrements de verrouillage de l'intérêt en cours de tous les complexes dans chaque classe de congruence afin de sélectivement accorder, mettre en attente et refuser des verrouillages pour les ressources de données auxdits dispositifs de gestion, un dispositif d'exploitation (21, 22) dans chaque complexe pour commander le fonctionnement du système multiprocesseur, pour communiquer des données d'enregistrement de verrouillage mise à jour entre les complexes pour maintenir chaque système de gestion de verrouillage dans une condition mise à jour pour maintenir les verrouillages pour les ressources de données sélectivement en cas de dérangement d'un complexe complet (11, 12) d'un dispositif de gestion (31, 32, 33, 34) et du dispositif de communication (23, 24, 27), de manière que

(1) en résponse à un dérangement des complexes, lesdits dispositifs de gestion d'informations des autres complexes ont pour fonction d'inhiber l'accès à des classes de congruence dans les ressources de données dans lesquelles le système respectif de gestion de verrouillage indique un intérêt par le complexe défaillant, et

(2) en réponse à un dérangement du dispositif de communication, le dispositif de gestion d'information dans chaque complexe a pour fonction de limiter l'accès aus classes de congruence dans les ressources de données à des classes dans lesquelles le système de gestion de verrouillage respectif indique un intérêt exclusif par le complexe.

2. Système selon la revendication 1, caractérisé en ce qu'en réponse à une défaillance de l'un des dispositifs de gestion d'information, les autres dispositifs de gestion d'information ont pour fonction d'inhiber l'accès à des classes de congruence dans des ressources de données dans lesquelles le dispositif en dérangement maintient un verrouillage dans le système de gestion de verrouillage.

3. Système selon la revendication 2, caractérisé en ce que, à la défaillance d'un complexe (11, 12) ou du

11

**0 049 423**

dispositif de communication ou dans un dispositif de gestion d'informations, les systèmes de gestion de verrouillage dans des complexes continuants maintiennent des verrouillages liés aux dérangements pour effectuer une inhibition d'accès jusqu'à la fin du traitement de redémarrage/récupération de l'unité défaillante.

12

FIG. 1

FIG. 2